# EUROPEAN PATENT SPECIFICATION

(11) **EP 0 927 749 B1**
(45) Date of publication and mention of the grant of the patent: **26.02.2003**
(21) Application number: 97811029.4
(22) Date of filing: 29.12.1997
(51) Int. Cl.: C09D 11/00, C09C 1/00, B41M 3/14, B42D 15/00

(54) **Coating composition, use of particles, method for tagging and identifying a security document comprising said coating composition**
Überzugszusammensetzung, Verwendung von Teilchen, Verfahren zur Markierung und Identifizierung eines diese Überzugszusammensetzung enthaltenden Sicherheitsdokumentes
Composition de revêtement, utilisation de particules, procédé pour marquer et identifier un document de valeur pourvu d'un tel revêtement

(43) Date of publication of application: 07.07.1999
(73) Proprietor: SICPA HOLDING S.A., 1008 Prilly (CH)
(72) Inventor: Bleikolm, Anton, 1024 Ecublens (CH); Müller, Edgar, 1006 Lausanne (CH); Rozumek, Olivier, 1609 St. Martin (CH)
(74) Representative: Hepp, Dieter

(56) References cited:
- EP-A- 0 353 544
- EP-A- 0 741 170
- DE-A- 4 419 089
- US-A- 4 131 064

## Description

The present invention relates to the use of particles formed of at least two thin inorganic layers, distinct in their chemical composition, in a predefined analytically identifiable sequence and/or predefined analytically identifiable thickness, for the marking of coating compositions and/or for the encoding of bulk materials and products formed thereof. Such encoded particles are used as tags and as security elements thus preventing the article from being counterfeited.

Encoded micro-particles whose code is represented by at least three visually distinguishable colored layers of organic resins and their use as tag and/or security feature in order to prevent reproduction of articles have already been described in DE 26 51 528 and US 4,329,393. Originally, these organic particles have been developed to allow tracing of explosives from production to detonation. These tags are sold under the trade name Microtaggant or Microtrace.

As the colour sequence of the layers is the only coding feature, particle size and material selection limits the application of these tags. Particle size below 30 µm is a necessary requirement for many applications, particularly printing inks and related products. Highly resolved lines and figures are difficult to produce with printing inks containing particles larger than the printed feature itself. Particles made of organic laminate can hardly be ground down to sizes in the desired range.

A further disadvantage of these organic micro particles is their lack of heat resistance. This results in the destruction of a tagging or security element when the article is exposed to fire or heat.

US 5,670,239 discloses a method of marking using specific spectroscopic properties of chemical elements. The elements are provided as stock solutions, which are mixed into the material to be marked. The delocalised nature of this marking method is a true disadvantage. The recovery of the coding information will be incomplete in case the distribution of the marking elements throughout the mass of the article is inhomogenous. This will be observed in situations where the affinity of the various marking elements or stock solutions is not given with the components of the article or composition to be marked.

EP 0 353 544 describes a pigment having an optically semitransparent outer layer consisting of deposited metal. The core of the pigment consists of a translucent carrier particle coated with metal oxides. The depositing of the metal layer is done by chemical, physical or physio-chemical methods. There are no indications given about a possibility of introducing a kind of coding within the pigments.

DE 4 419 089 discloses the use of titan dioxide coated silicate plates for producing counterfeit-proof documents or wrappings. The titanium dioxide coating is subjected to a reduction process within an atmosphere containing reducing agents. A possible use of different states of reduction as a type of coding is not indicated.

One major object of the present invention is to provide means of localised tagging for identification and security purposes. In the context of the invention the term localised means that all the coding information is concentrated in the same particle.

Another object is to improve heat resistance, to lower particle size, to faciliate use and to enlarge the coding capacity of the tagging system.

These objectives are solved by the characteristic features of the independent claims.

By using particles comprising at least two thin inorganic layers, distinct in their chemical composition, in a predefined analytically identifiable sequence and/or predefined analytically identifiable thickness as a tag, any desired product can be provided with markings and security features. In the context of this invention a variation in the chemical composition from layer to layer enables an analytical identification of the sequence. Due to their nature, the particles are capable of sustaining high temperatures. The preferred particle size is in the range of 0.5 to 100 µm and, for the use in printing inks, more preferably in the range from 1 to 30 µm, and even more preferably in the range from 1 to 10µm. Brittle materials have to be chosen in order to allow grinding down to the required particle sizes.

The particles are formed of at least two thin inorganic layers. The layers are substantially planar. The particles are preferably in the form of flat flakes with mainly parallel surfaces. Due to the grinding process, the flakes may possess irregular broken edges across the layer sequence. Each individual layer is produced in a predefined thickness which may be in the range of 10 to 2000 nm, more preferably in the range of 50 to 500 nm.

It has now unexpectedly been found that the sequence of said layers, even when the flakes are formed by a multiplicity of layers, can be retrospectively analysed by a combination of scanning electron microscopy and X-ray analysis or scanning electron microscopy under back scattered electron (BSE) detection. Thus, each predefined sequence bears information and represents a code.

In addition to compositional differences coding information can be provided by variation of the layer-thicknesses. Also a specific and predetermined thickness of the individual layers is possible to be retrospectively analysed using scanning electron microscopy.

The code created by predetermined sequences and/or thicknesses of the layers within the particles is used to represent specific information, for example to identify a producer, customer, production batch, etc.

The substances capable of forming said thin inorganic layers are preferably selected from the group consisting of oxides, oxisulfides, oxifluorides, fluorides, sulfides or selenides and mixtures thereof, in particular the following: BeO, MgO, CaO, SrO, BaO, ZnO, PbO, Al₂O₃, Ga₂O₃, In₂O₃, Sc₂O₃, Y₂O₃, Ln₂O₃, Sb₂O₃, Bi₂O₃, SiO₂, GeO₂, SnO₂, TiO₂, ZrO₂, HfO₂, CeO₂, ThO₂, BeF₂, MgF₂, CaF₂, SrF₂, BaF₂, ZnF₂, AlF₃, GaF₃, InF₃, ScF₃, YF₃, LnF₃,YOF, LnOF, SbOF, BiOF, ThF₄, ZnS, CdS, ZnSe, CdSe, Y₂O₂S, Ln₂O₂S (Ln=Lanthanides: La, Ce, Pr, Nd, Sm, Eu, Gd, Tb, Dy, Ho, Er, Tm, Yb, Lu).

The layers also can be formed by substances which are selected from the group consisting of stoichiometric crystalline compounds with anions selected from N, O, F, S, Cl, Se and cations selected from H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln=Lanthanides: La, Ce, Pr, Nd, Sm, Eu, Gd, Tb, Dy, Ho, Er, Tm, Yb, Lu).

In a further embodiment of the present invention, the inorganic layers are formed by substances selected from the group consisting of nonstoichiometric crystalline compounds or from the group consisting of amorphous or vitreous compounds with anions selected from N, O, F, S, Cl, Se and cations selected from H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln=Lanthanides: La, Ce, Pr, Nd, Sm, Eu, Gd, Tb, Dy, Ho, Er, Tm, Yb, Lu).

In another embodiment particles are used in which one or more of said thin inorganic layers is a metal. Additionally, said substances used for the production of said thin layers can optionally have luminescent, magnetic, IR absorbing, radio frequency and/or microwave resonance properties. These features, which can be exploited as such for detection purposes, additionally provide the marking particle of the invention with an increased encoding capacity and make its localisation easier.

The encoded particles of the present invention can be applied to any article or incorporated into any material which needs to be marked and/or protected against counterfeiting. In a preferred embodiment of the present invention, the particles are incorporated in coating compositions and printing inks. Suitable materials are all kinds of organic polymers such as, for example, polyesters, polyurethanes, alkyds, polycarbonates, all kinds of natural and synthetic latex emulsions, polyethylene, polypropylene, modified cellulose, vinylic and acrylic resins, epoxy resins, etc. and all modifications and mixtures thereof. The use of encoded particles in inorganic materials is limited in so far as the production process must not destroy the encoded particles.

In a preferred embodiment of the present invention the tagging composition is applied as an invisible layer.

A printing ink or coating formulation is not limited to any particular composition. For example ink compositions are applicable whose composition are described in the "Printing Ink Manual", Ed: R.H. Leach, R.J. Pierce, E.P. Hickman, M.J. Mackenzie, H.G. Smith, Blueprint, 5th edition, 1993.

When incorporated into coating compositions, the amount of encoded particles may range from 0.0001% to 10%, preferably from 0.001% to 1%, and even more preferably from 0.01% to 0.1% by weight of the overall composition.

The production of the multilayered particles is performed by any of the known techniques, particularly by physical vapor deposition, chemical vapor deposition, sputtering or wet processes, as described, for example, in "Ullmann's Enzyclopädie der Technischen Chemie", 4th edition, 1974, Verlag Chemie, Weinheim, Germany, volume 10, page 257 ff. The production of the taggant particles or flakes comprises typically the steps of i) depositing (by sputtering, physical or chemical vapor deposition, or by wet processes) a sequence of inorganic layers with distinct compositions on top of each other onto a detachable carrier, ii) detaching the thin-film material from the carrier and iii) grinding the thin-film material to obtain the desired particle size. Examples of this process are described in US 4,930,866.

The retrospective identification of the chemical compositions forming the individual layers of the multilayered particle, in other words, the reading of the tag code, is carried out by scanning electron microscopy (SEM) combined with X-ray analysis (e.g. with an energy-dispersive X-ray (EDX) detector). The procedure of analysis comprises a first step in which multilayered particles having a suitable orientation with respect to the scanning electron beam are sought, and a second step in which analysis is performed across the layered edge of the particle in order to determine the compositional sequence and/or thickness of the layers, thereby reading the code of the particle. Depending on the application, taggant concentrations ranging from 10⁻⁴ to 10⁻¹ parts per weight of the tagged material can be detected and analysed in this way.

In a variant of the method, encoded particles are sought and analysed by scanning electron microscopy (SEM) under back-scattered electron detection (BSED, "chemical contrast"). The intensity of electron back-scattering from a material increases according to the laws of Rutherford scattering with the square of the atomic number of the scattering element and therefore permits an easy distinction between lighter and heavier elements. In this case, the taggant particles preferably contain a given amount of a heavy element, enabling them to be identified in a matrix consisting mainly of light elements. Such particles are preferably encoded by a sequence of layers of different scattering power using the same or a different thickness for the individual layers.

These analytical methods also enable the use of two or more different groups of particles of the present invention in mixture wherein at least two groups can comprise particles having at least two layers of the same chemical substances but in a different sequence. Each group of such a mixture may be used to mark a product. This is another way to increase the encoding capacity of the invention.

Also disclosed by the present invention is a method for tagging a bulk material or a substrate to which a coating composition is applied, comprising the steps of
A) producing particles consisting of at least two thin inorganic layers having planar surfaces, distinct in their chemical composition, in a predefined sequence and/or predefined thickness, the chemical composition, the sequence and/or the thickness representing a code
B) incorporating the particles obtained in step A) into the bulk material or into the coating composition,
C) applying the coating composition of step B) to a substrate and/or bringing the bulk material in a predefined form
D) hardening of the material or coating composition obtained in step C) when necessary.

In an further embodiment of the present invention a method is disclosed for tagging and identifying a bulk material or a substrate to which a coating composition is applied.

This method comprises the steps of
A) producing particles consisting of at least two thin inorganic layers having planar surfaces, distinct in their chemical composition, in a predefined sequence and/or predefined thickness,
B) incorporating said particles obtained in step A) into a bulk material or into a coating composition,
C) optionally adding to the mixture of step B) additional solvents, binders, extenders, pigments and other additives
D) applying the coating composition of step B) to a substrate and/or bringing the bulk material in a predefined form
E) hardening of the bulk material and/or coating composition applied in step D) when necessary.
F) analysing the sequence and/or thickness of the individual layers of said particle comprised in the bulk material or in the coating composition by a combination of scanning electron microscopy and X-ray analysis or scanning electron microscopy under back-scattered electron detection.

In a preferred embodiment the code of the particles incorporated in the bulk material or coating composition is fed in a computer. The comparison of the saved code with the code detected or read allows an automate identification.

The method is also suitable when two or more different groups of encoded particles in mixture are incorporated in a bulk material or coating composition. Such mixtures can comprise particles with at least two layers of the same chemical composition but in a varying sequence.

In a further embodiment of the present invention, a coating composition was produced according to the above-described method containing encoded particles possessing layer thicknesses in the range of 50 nm to 2 µm, preferably 50 to 500nm and the size of the particle is inferior to 30 µm. In a preferred embodiment the coating composition is a printing ink.

The coating composition additionally can comprise further pigments having luminescent, magnetic, UV-, VIS- and IR-absorbing, radio-frequency and/or microwave resonant, thermochromic, photochromic or optically variable properties.

A further embodiment of the present invention are security documents such as bank notes, personal cheques, credit cards, etc. produced by applying said coating composition respectively printing ink on appropriate substrates.

Since tagging by means of the micro-particles of the present invention is not only limited to coating compositions or printing inks, any composition comprising at least one organic and/or inorganic material can be provided with said micro-particles in order to create a tag and/or security element.
- Fig. 1: represents the construction of an encoded microparticle of the invention. The distance a-b is 3.5 µm.
- Fig. 2: presents the analysis of a multi-layered material of the following sequence: Cr (60nm)/Mg F₂ (400nm)/Al (60nm)/Mg F₂ (400nm)/Cr (60nm) using SEM-EDX.
- Fig. 3-5: show a schematic cross-section of coding structures consisting of any suitable combination of substances and thicknesses designated as A to K.

The following non-limiting examples further illustrate the present invention.

### Example 1

### Flexographic printing ink:

A multilayered material of the following sequence was prepared by vacuum evaporation: chromium (60 nm) / magnesium fluoride (400 nm) / aluminum (100 nm).

The material was ground down in a Jet mill or air mill (cyclone) to obtain marking multilayered particles in the range of 1 to 10 µm.

A marked flexographic printing ink was prepared by adding 1% of the encoded particles described above to a blue flexographic ink from the manufacturer SICPA.

The micronized particles were incorporated homogeneously in the flexographic ink which subsequently was applied on a paper substrate. After drying, the particles were not visible to the naked eye and the spacial and analytical resolution were checked by a cross-sectional SEM/EDX scan.

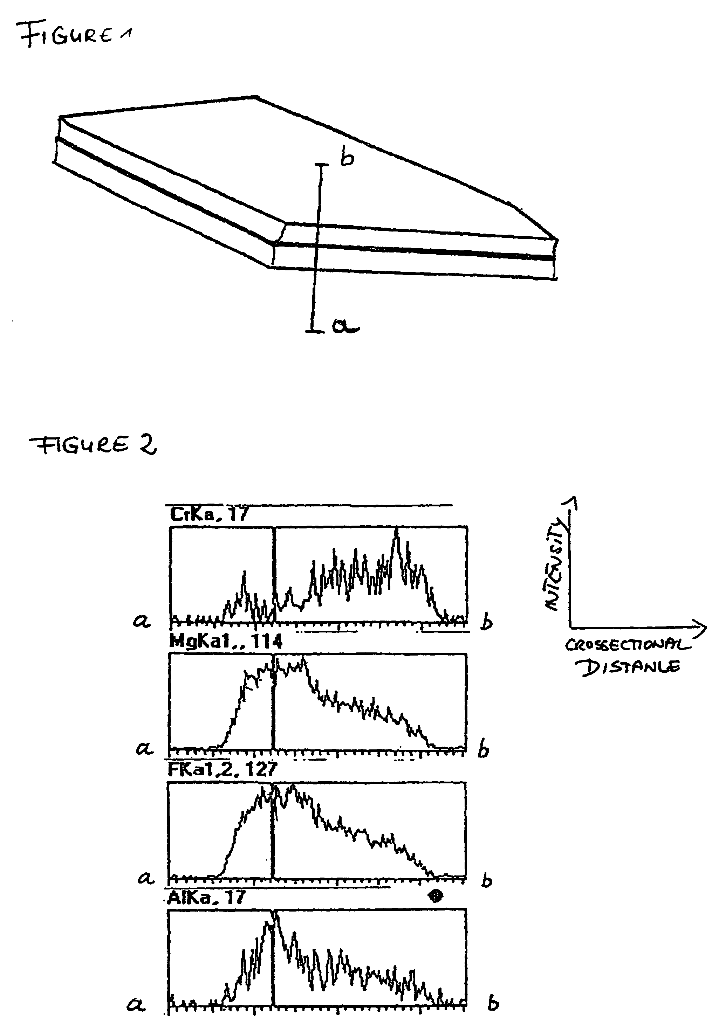

Figure 2 illustrates the analytical method of the X-ray response signals at a 20 kV electron beam energy across the line a) - b) (cross-section) of Figure 1. The Kα lines for the elements chromium, magnesium, fluorine and aluminium are given.

The distribution of the various elements over the layered sequence is evident.

### Example 2

Multilayered, thin films were prepared by vacuum evaporation of a sequence of different fluorides onto a thin glass carrier. The following sequences of layers were deposited:
LaF₃/MgF₂/CeF₃
LaF₃/CeF₃/GdF₃/LaF₃/CeF₃

The thin film material was detached and ground and the resulting particles were incorporated in a polyethylene granulate in an amount of 10% by weight of the total weight of the granulate. The polyethylene was extruded in a conventional extruder. The extruded sheet material was then analyzed in the way described in Example 1 using SEM/X-ray analysis and the sequence order of the constituting elements could be unambiguously identified.

### Example 3

A marked silk screen ink composition according to the invention was prepared by adding 0.1% of marking particles having the following composition and thickness sequence: Ni (600nm) / MgF₂ (400nm) / Cr (150nm) to a silk screen ink from SICPA. The ink was then printed on banknote paper.

During analysis, the nickel containing optically variable flakes were located on the SEM due to their high back-scattering power and a cross-sectional scan revealed the presence of nickel in the marking material.

According to Fig. 3, coding is achieved by differentiating between microparticles having a different sequence (3a and 3b). The particles may be used for coding different products.

According to Fig. 4 different codes are created by using the same layer forming substances in different thicknesses (4a and 4b).

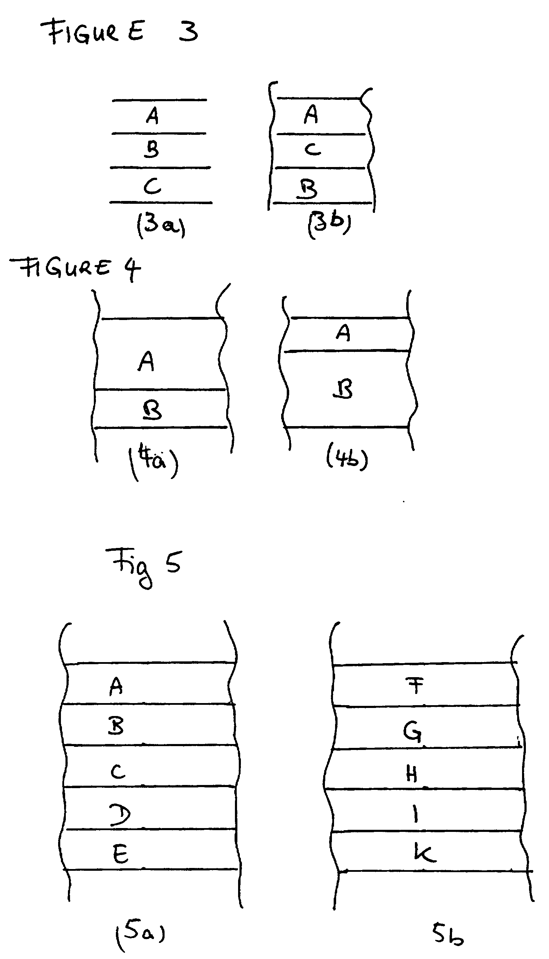

According to Fig. 5 different codes are formed by producing layers of different chemical compositions (5a and 5b).

All particles described in Figs. 3-5 can be used for coding different products or in any combination in one product.

## Claims

1. Use of particles comprising at least two thin inorganic layers having parallel surfaces, distinct in their chemical composition, in a predefined analytically identifiable sequence and/or predefined analytically identifiable thickness as a tag.

2. Use of particles according to claim 1 in a coating composition, in amounts ranging from 0.0001% to 10% preferably 0.001% to 1%, and more preferably 0.01% to 0.1% by weight of the total weight of the overall composition.

3. Use of particles according to claim 1 and 2 wherein the sequence and/or thickness of said layers is capable of being analysed by a combination of scanning electron microscopy and X-ray analysis or scanning electron microscopy under back-scattered electron detection.

4. Use of particles according to any of the claims 1 to 3, wherein the number of layers forming said particles is at least three.

5. Use of particles according to any of the claims 1 to 4, wherein the thickness of said layers is in the range of 10 to 2000 nm.

6. Use of particles according to claims 1 to 5, wherein the thickness of said layers is in the range of 50 to 500 nm.

7. Use of particles according to claims 1 to 6, wherein the size of said particles is in the range of 0.5 µm to 100 µm, preferably 0.5 µm to 30 µm.

8. Use of particles according to claims 1 to 7, wherein the size of said particles is in the range of 1 µm to 10 µm.

9. Use of particles according to any of the preceding claims **characterized in that** one or more of said thin inorganic layers is selected from the group consisting of oxides, oxisulfides, oxifluorides, fluorides, sulfides, or selenides from: BeO, MgO, CaO, SrO, BaO, ZnO, PbO, Al₂O₃, Ga₂O₃, In₂O₃, Sc₂O₃, Y₂O₃, Ln₂O₃, Sb₂O₃, Bi₂O₃, SiO₂, GeO₂, SnO₂, TiO₂, ZrO₂, HfO₂, CeO₂, ThO₂, BeF₂, MgF₂, CaF₂, SrF₂, BaF₂, ZnF₂, AlF₃, GaF₃, InF₃, ScF₃, YF₃, LnF₃, YOF, LnOF, SbOF, BiOF, ThF₄, ZnS, CdS, ZnSe, CdSe, Y₂O₂S, Ln₂O₂S (Ln=Lanthanides: La, Ce, Pr, Nd, Sm, Eu, Gd, Tb, Dy, Ho, Er, Tm, Yb, Lu).

10. Use of particles according to any of the claims 1 to 8, **characterized in that** one or more of said thin inorganic layers is selected from the group consisting of stoichiometric crystalline compounds with anions selected from N, O, F, S, Cl, Se and cations selected from H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln=Lanthanides: La, Ce, Pr, Nd, Sm, Eu, Gd, Tb, Dy, Ho, Er, Tm, Yb, Lu).

11. Use of particles according to any of the claims 1 to 8, **characterized in that** one or more of said thin inorganic layers is selected from the group consisting of nonstoichiometric crystalline compounds with anions selected from N, O, F, S, Cl, Se and cations selected from H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln=Lanthanides: La, Ce, Pr, Nd, Sm, Eu, Gd, Tb, Dy, Ho, Er, Tm, Yb, Lu).

12. Use of particles according to any of claims 1 to 8, **characterized in that** one or more of said thin inorganic layers is selected from the group consisting of amorphous or vitreous compounds with anions selected from N, O, F, S, Cl, Se and cations selected from H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln=Lanthanides: La, Ce, Pr, Nd, Sm, Eu, Gd, Tb, Dy, Ho, Er, Tm, Yb, Lu).

13. Use of particles according to claims 1 to 8, **characterized in that** one or more of said thin inorganic layers is a metal.

14. Use of particles according to any of the preceding claims wherein said particles additionally have one or more of the following properties: luminescence, magnetism, IR-absorption, radio-frequency and/or microwave resonance.

15. Use of particles according to one or more of the preceding claims in a coating composition.

16. Use of particles according to one or more of the preceding claims having a code defined by chemical composition, sequence and/or thickness of the layers comprised in the particle for the production of a security document.

17. Use of particles according to one or more of the preceding claims, comprising two or more different groups of particles wherein at least two groups comprise particles having at least two layers of the same substance but in a different sequence and/or thickness.

18. Method for tagging a substrate, comprising the steps of:
(a) producing particles consisting of at least two thin inorganic layers having planar surfaces, distinct in their chemical composition, in a predefined sequence and/or predefined thickness, the chemical composition, the sequence and/or the thickness representing a code;
(b) incorporating the particles obtained in step a into a coating composition;
(c) applying the coating composition of step b to a substrate;
(d) hardening of the coating composition applied in step c.

19. Method for tagging and identifying a substrate, comprising the steps of:
(a) producing particles consisting of at least two thin inorganic layers having planar surfaces, distinct in their chemical composition, in a predefined sequence and/or predefined thickness;
(b) incorporating the particles obtained in step a into a coating composition;
(c) applying the coating composition of step b to a substrate;
(d) hardening of the coating composition applied in step c;
(e) analysing the sequence and/or thickness of layers of said particle in the coating layer obtained in step d.

20. Method for tagging and identifying a material and products formed thereof comprising the steps of:
(a) producing particles consisting of at least two thin inorganic layers having planar surfaces, distinct in their chemical composition, in a predefined sequence and/or predefined thickness;
(b) incorporating the particles obtained in step a into a material to form a tagged product;
(c) optionally bringing the tagged material in the desired product shape and harden it;
(d) analysing the sequence and/or thickness of layers of said particle incorporated into the product in step b.

21. Method for tagging and identifying a material or substrate according to claim 19 or 20 wherein the sequence and/or thickness of layers of said particles is analysed by a combination of scanning electron microscopy and X-ray analysis or scanning electron microscopy under back-scattered electron detection to identify the product or coating composition.

22. Method according to any of the claims 18 to 21 **characterized in that** said particles are added in an amount of 0.0001% to 10% by weight of the total weight of the material and/or coating composition.

23. Coating composition comprising at least one binder and particles according to one or more of the claims 1 to 17 wherein the chemical composition, the sequence and/or the thickness of the layers of the particle represent a predefined code.

24. Coating composition, preferably ink, according to claim 23 wherein the coating additionally comprises pigments selected from the group having luminescent, magnetic, UV, VIS and IR-absorbing, radio-frequency and/or microwave resonant, thermochromic, photochromic, or optically variable properties.

25. Security document comprising a tag applied by a coating composition and/or ink according to claim 24.

26. Composition comprising at least one organic and/or inorganic material and at least one type of particles according to one or more of claims 1 to 17.

## Patentansprüche

1. Verwendung von Partikeln umfassend zumindest zwei dünne anorganische Schichten mit parallelen Oberflächen, sich unterscheidend in ihrer chemischen Zusammensetzung, in einer vorab bestimmten analytisch identifizierbaren Abfolge und/oder einer vorab bestimmten analytisch identifizierbaren Dicke als eine Markierung.

2. Verwendung von Partikeln nach Anspruch 1 in einer Überzugszusammensetzung, bei sich zwischen 0.0001 Gewichtsprozent bis 10 Gewichtsprozent, vorzugsweise zwischen 0.001 Gewichtsprozent bis 1 Gewichtsprozent, und insbesondere bevorzugt zwischen 0.01 Gewichtsprozent bis 0.1 Gewichtsprozent bewegenden Mengen des Gesamtgewichts der Gesamtzusammensetzung.

3. Verwendung von Partikeln nach Anspruch 1 und 2, wobei die Abfolge und/oder die Dicke der Schichten mittels einer Kombination aus Rasterelektronenmikroskopie und Röntgenstrahlenanalyse oder mittels Rasterelektronenmikroskopie mit zurückgestreuter Elektronenerfassung analysiert werden kann.

4. Verwendung von Partikeln nach einem der Ansprüche 1 bis 3, wobei die Anzahl an die Partikel ausbildenden Schichten mindestens drei beträgt.

5. Verwendung von Partikeln nach einem der Ansprüche 1 bis 4, wobei sich die Dicke der Schichten im Bereich von 10 bis 2000 nm bewegt.

6. Verwendung von Partikeln nach einem der Ansprüche 1 bis 5, wobei sich die Dicke der Schichten im Bereich von 50 bis 500 nm bewegt.

7. Verwendung von Partikeln nach einem der Ansprüche 1 bis 6, wobei sich die Partikelgröße im Bereich von 0.5 µm bis 100 µm, vorzugsweise von 0.5 µm bis 30 µm bewegt.

8. Verwendung von Partikeln nach einem der Ansprüche 1 bis 7, wobei sich die Partikelgröße im Bereich von 1 µm bis 10 µm bewegt.

9. Verwendung von Partikeln nach einem der vorhergehenden Ansprüche, **dadurch gekennzeichnet, dass** eine oder mehrere der dünnen anorganischen Schichten aus der aus Oxiden, Oxisulfiden, Oxifluoriden, Fluoriden, Sulfiden, oder Seleniden aus: BeO, MgO, CaO, SrO, BaO, ZnO, PbO, Al₂O₃, Ga₂O₃, In₂O₃, Sc₂O₃, Y₂O₃, Ln₂O₃, Sb₂O₃, Bi₂O₃, SiO₂, GeO₂, SnO₂, TiO₂, ZrO₂, HfO₂, CeO₂, ThO₂, BeF₂, MgF₂, CaF₂, SrF₂, BaF₂, ZnF₂, AlF₃, GaFₐ, InF₃, ScF₃, YF₃, LnF₃, YOF, LnOF, SbOF, BiOF, ThF₄, ZnS, CdS, ZnSe, CdSe, Y₂O₂S, Ln₂O₂S (Ln=Lanthanide: La, Ce, Pr, Nd, Sm, Eu, Gd, Tb, Dy, Ho, Er, Tm, Yb, Lu) bestehenden Gruppe ausgewählt ist.

10. Verwendung von Partikeln nach einem der Ansprüche 1 bis 8, **dadurch gekennzeichnet, dass** eine oder mehrere der dünnen anorganischen Schichten aus der aus stöchiometrischen mit aus N, O, F, S, Cl, Se ausgewählten Anionen und aus H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln=Lanthanide: La, Ce, Pr, Nd, Sm, Eu, Gd, Tb, Dy, Ho, Er, Tm, Yb, Lu) ausgewählten Kationen bestehenden Gruppe ausgewählt ist.

11. Verwendung von Partikeln nach einem der Ansprüche 1 bis 8, **dadurch gekennzeichnet, dass** eine oder mehrere der dünnen anorganischen Schichten aus der aus nichtstöchiometrischen kristallinen Verbindungen mit aus N, O, F, S, Cl, Se ausgewählten Anionen und aus H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln=Lanthanide: La, Ce, Pr, Nd, Sm, Eu, Gd, Tb, Dy, Ho, Er, Tm, Yb, Lu) ausgewählten Kationen bestehenden Gruppe ausgewählt ist.

12. Verwendung von Partikeln nach einem der Ansprüche 1 bis 8, **dadurch gekennzeichnet, dass** eine oder mehrere der dünnen anorganischen Schichten aus der aus amorphen oder glasartigen Komponenten mit aus N, O, F, S, Cl, Se ausgewählten Anionen und aus H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln=Lanthanide: La, Ce, Pr, Nd, Sm, Eu, Gd, Tb, Dy, Ho, Er, Tm, Yb, Lu) ausgewählten Kationen bestehenden Gruppe ausgewählt ist.

13. Verwendung von Partikeln nach einem der Ansprüche 1 bis 8, **dadurch gekennzeichnet, dass** eine oder mehrere der dünnen anorganischen Schichten ein Metall ist.

14. Verwendung von Partikeln nach einem der vorhergehenden Ansprüche, wobei die Partikel zusätzlich eine oder mehrere der folgenden Eigenschaften aufweisen: Lumineszenz, Magnetismus, IR-Absorption, Hochfrequenzresonanz und/oder Mikrowellenresonanz.

15. Verwendung von Partikeln nach einem oder mehreren der vorhergehenden Ansprüchen in einer Überzugszusammensetzung.

16. Verwendung von Partikeln nach einem oder mehreren der vorhergehenden Ansprüchen mit einem durch die chemische Zusammensetzung, die Abfolge und/oder die Dicke der von den Partikeln umfassten Schichten definierten Code zur Herstellung eines Sicherheitsdokuments.

17. Verwendung von Partikeln nach einem oder mehreren der vorhergehenden Ansprüchen mit zwei oder mehreren verschiedenen Partikelgruppen, wobei zumindest zwei Gruppen Partikel mit zumindest zwei Schichten derselben Substanz jedoch in einer unterschiedlichen Abfolge und/oder Dicke umfassen.

18. Verfahren zur Markierung eines Substrats, umfassend die Schritte des:
(a) Herstellens von Partikeln bestehend aus zumindest zwei dünnen anorganischen Schichten mit planaren Oberflächen, sich unterscheidend in ihrer chemische Zusammensetzung, in einer vorab bestimmten Abfolge und/oder einer vorab bestimmten Dicke, wobei die chemische Zusammensetzung, die Abfolge und/oder die Dicke einen Code verkörpert;
(b) Integrierens der in Schritt a erhaltenen Partikel in eine Überzugszusammensetzung;
(c) Auftragens der Überzugszusammensetzung aus Schritt b auf ein Substrat;
(d) Härtens der in Schritt c aufgetragenen Überzugszusammensetzung.

19. Verfahren zur Markierung und Identifizierung eines Substrats, umfassend die Schritte des:
(a) Herstellens von Partikeln bestehend aus zumindest zwei dünnen anorganischen Schichten mit planaren Oberflächen, sich unterscheidend in ihrer chemische Zusammensetzung, in einer vorab bestimmten Abfolge und/oder einer vorab bestimmten Dicke;
(b) Integrierens der in Schritt a erhaltenen Partikel in eine Überzugszusammensetzung;
(c) Auftragens der Überzugszusammensetzung aus Schritt b auf ein Substrat;
(d) Härtens der in Schritt c aufgetragenen Überzugszusammensetzung;
(e) Analysierens der Abfolge und/oder der Dicke von Schichten des in Schritt d erhaltenen Partikels in der Überzugsschicht.

20. Verfahren zur Markierung und Identifizierung eines Materials und daraus ausgebildeten Produkten umfassend die Schritte des:
(a) Herstellens von Partikeln bestehend aus zumindest zwei dünnen anorganischen Schichten mit planaren Oberflächen, sich unterscheidend in ihrer chemische Zusammensetzung, in einer vorab bestimmten Abfolge und/oder einer vorab bestimmten Dicke;
(b) Integrierens der in Schritt a erhaltenen Partikel in ein Material zur Ausbildung eines markierten Produkts;
(c) wahlweisen Überführens des markierten Materials in die gewünschte Produktform und des Härtens derselben;
(d) Analysierens der Abfolge und/oder der Dicke von Schichten der in das Produkt in Schritt b integrierten Partikel.

21. Verfahren zur Markierung und Identifizierung eines Materials oder Substrats nach Anspruch 19 oder 20, wobei die Abfolge und/oder die Dicke von Schichten der Partikel mittels einer Kombination aus Rasterelektronenmikroskopie und Röntgenstrahlenanalyse oder mittels Rasterelektronenmikroskopie mit zurückgestreuter Elektronenerfassung zur Identifikation des Produkts oder der Überzugszusammensetzung analysiert wird.

22. Verfahren nach einem der Ansprüche 18 bis 21, **dadurch gekennzeichnet, dass** diese Partikel in einer Menge von 0.0001 Gewichtsprozent bis 10 Gewichtsprozent des Gesamtgewichts des Materials und/oder der Überzugszusammensetzung hinzugefügt werden.

23. Überzugszusammensetzung umfassend zumindest ein Bindemittel und Partikel nach einem oder mehrere der Ansprüche 1 bis 17, wobei die chemische Zusammensetzung, die Abfolge und/oder die Dicke der Schichten des Partikels einen vorab bestimmten Code verkörpert.

24. Überzugszusammensetzung, vorzugsweise Tinte, nach Anspruch 23, wobei der Überzug zusätzlich ausgewählte Pigmente aus der Gruppe umfasst, welche die Eigenschaften der Lumineszenz, des Magnetismus, der UV-, VIS- und IR-Absorption, der Hochfrequenzresonanz und/oder der Mikrowellenresonanz, sowie thermochromische, photochromische oder optisch variable Eigenschaften aufweisen.

25. Sicherheitsdokument umfassend eine mittels Überzugszusammensetzung und/oder Tinte nach Anspruch 24 aufgetragene Markierung.

26. Zusammensetzung umfassend zumindest ein organisches und/oder ein anorganisches Material und zumindest eine Art von Partikeln nach einem oder mehreren der Ansprüche 1 bis 17.

## Revendications

1. Utilisation, en tant que marqueur, de particules comprenant au moins deux couches inorganiques minces ayant des surfaces parallèles, distinctes par leur composition chimique, selon une séquence prédéfinie, analytiquement identifiable, et/ou une épaisseur prédéfinie, analytiquement identifiable.

2. Utilisation de particules selon la revendication 1 dans une composition de revêtement, en des quantités comprises dans la plage de 0,0001 % à 10 %, de préférence de 0,001 % à 1 %, et plus préférablement de 0,01 % à 0,1 %, en poids par rapport au poids total de la composition globale.

3. Utilisation de particules selon les revendications 1 et 2, dans laquelle la séquence et/ou l'épaisseur desdites couches peut être analysée par une combinaison d'une microscopie électronique à balayage et d'une analyse aux rayons X ou par microscopie électronique à balayage avec détection d'électrons rétro-diffusés.

4. Utilisation de particules selon l'une quelconque des revendications 1 à 3, dans laquelle le nombre de couches formant lesdites particules est d'au moins 3.

5. Utilisation de particules selon l'une quelconque des revendications 1 à 4, dans laquelle l'épaisseur desdites couches est comprise dans la plage de 10 à 2000 nm.

6. Utilisation de particules selon les revendications 1 à 5, dans laquelle l'épaisseur desdites couches est comprise dans la plage de 50 à 500 nm.

7. Utilisation de particules selon les revendications 1 à 6, dans laquelle la taille desdites particules est comprise dans la plage de 0,5 µm à 100 µm, de préférence de 0,5 µm à 30 µm.

8. Utilisation de particules selon les revendications 1 à 7, dans laquelle la taille desdites particules est comprise dans la plage de 1 µm à 10 µm.

9. Utilisation de particules selon l'une quelconque des revendications précédentes, **caractérisée en ce qu'**une ou plusieurs desdites couches inorganiques minces sont choisies dans l'ensemble constitué par les oxydes, oxysulfures, oxyfluorures, fluorures, sulfures et séléniures BeO, MgO, CaO, SrO, BaO, ZnO, PbO, Al₂O₃, Ga₂O₃, In₂O₃, Sc₂O₃, Y₂O₃, Ln₂O₃, Sb₂O₃, Bi₂O₃, SiO₂, GeO₂, SnO₂, TiO₂, ZrO₂, HfO₂, CeO₂, ThO₂, BeF₂, MgF₂, CaF₂, SrF₂, BaP₂, ZnF₂, AlF₃, GaF₃, InF₃, ScF₃, YF₃, LnF₃, YOF, LnOF, SbOF, BiOF, ThF₄, ZnS, CdS, ZnSe, CdSe, Y₂O₂S, Ln₂O₂S, (Ln = Lanthanides : La, Ce, Pr, Nd, Sm, Eu, Gd, Tb, Dy, Ho, Er, Tm, Yb, Lu).

10. Utilisation de particules selon l'une quelconque des revendications 1 à 8, **caractérisée en ce qu'**une ou plusieurs desdites couches inorganiques minces sont choisies dans l'ensemble constitué par des composés cristallins stoechiométriques ayant des anions choisis parmi N, O, F, S, Cl, Se, et des cations choisis parmi H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln = Lanthanides : La, Ce, Pr, Nd, Sm, Eu, Gd, Tb, Dy, Ho, Er, Tm, Yb, Lu).

11. Utilisation de particules selon l'une quelconque des revendications 1 à 8, **caractérisée en ce qu'**une ou plusieurs desdites couches inorganiques minces sont choisies dans l'ensemble constitué par les composés cristallins non stoechiométriques ayant des anions choisis parmi N, O, F, S, Cl, Se, et des cations choisis parmi H, Li, Na, K, Rb, Cs, Be, Mg, Ca, Sr, Ba, B, Al, Ga, In, Sc, Y, Ln, Si, Ge, Sn, Pb, Ti, Zr, Hf, Th, P, As, Sb, Bi, V, Nb, Ta, Cr, Mo, W (Ln = Lanthanides : La, Ce, Pr, Nd, Sm, Eu, Gd, Tb, Dy, Ho, Er, Tm, Yb, Lu).

12. Utilisation de particules selon l'une quelconque des revendications 1 à 8, **caractérisée en ce qu'**une ou plusieurs desdites couches inorganiques minces sont choisies dans l'ensemble constitué par les composés amorphes ou vitreux ayant des anions choisis parmi N, O, F, S, Cl, Se, et des cations choisis parmi H, Li, Na, K, Rb, Cs, Be, Mg, Ca, Sr, Ba, B, Al, Ga, In, Se, Y, Ln, Si, Ge, Sn, Pb, Ti, Zr, Hf, Th, P, As, Sb, Bi, V, Nb, Ta, Cr, Mo, W (Ln = Lanthanides : La, Ce, Pr, Nd, Sm, Eu, Gd, Tb, Dy, Ho, Er, Tm, Yb, Lu).

13. Utilisation de particules selon les revendications 1 à 8, **caractérisée en ce qu'**une ou plusieurs desdites couches inorganiques minces sont des métaux.

14. Utilisation de particules selon l'une quelconque des revendications précédentes, dans laquelle lesdites particules ont en outre une ou plusieurs des propriétés suivantes : luminescence, magnétisme, absorption IR, résonance radiofréquences et/ou hyperfréquences.

15. Utilisation de particules selon l'une ou plusieurs des revendications précédentes dans une composition de revêtements.

16. Utilisation de particules selon l'une ou plusieurs des revendications précédentes, ayant un code défini par la composition chimique, la séquence et/ou l'épaisseur des couches comprises dans la particule, pour la production d'un document de sécurité.

17. Utilisation de particules selon l'une ou plusieurs des revendications précédentes, comprenant deux groupes différents de particules, ou plus, où au moins deux groupes comprennent des particules ayant au moins deux couches de la même substance, mais avec une séquence et/ou une épaisseur différente.

18. Procédé pour marquer un substrat, comprenant les étapes de
a) production de particules consistant en au moins deux couches inorganiques minces ayant des surfaces planes, distinctes par leur composition chimique, selon une séquence prédéfinie et/ou une épaisseur prédéfinie, la composition chimique, la séquence et/ou l'épaisseur représentant un code ;
b) incorporation des particules obtenues dans l'étape a) dans une composition de revêtement ;
c) application de la composition de revêtement de l'étape b) sur un substrat ;
d) durcissement de la composition de revêtement appliquée dans l'étape c).

19. Procédé pour marquer et identifier un substrat, qui comprend les étapes de
a) production de particules consistant en au moins deux couches inorganiques minces ayant des surfaces planes, distinctes par leur composition chimique, selon une séquence prédéfinie et/ou une épaisseur prédéfinie ;
b) incorporation des particules obtenues dans l'étape a) dans une composition de revêtement ;
c) application de la composition de revêtement de l'étape b) sur un substrat;
d) durcissement de la composition de revêtement appliquée dans l'étape c) ;
e) analyse de la séquence et/ou de l'épaisseur des couches de ladite particule dans la couche de revêtement obtenue dans l'étape d).

20. Procédé pour marquer et identifier un matériau et des produits formés de ce dernier, qui comprend les étapes de
a) production de particules consistant en au moins deux couches inorganiques minces ayant des surfaces planes, distinctes par leur composition chimique, selon une séquence prédéfinie et /ou une épaisseur prédéfinie ;
b) incorporation des particules obtenues dans l'étape a) dans un matériau pour former un produit marqué ;
c) éventuellement, mise du matériau marqué sous la forme du produit recherché, et durcissement de celui-ci ;
d) analyse de la séquence et/ou de l'épaisseur des couches de ladite particule incorporée dans le produit dans l'étape b)

21. Procédé pour marquer et identifier un matériau ou un substrat selon la revendication 19 ou 20, dans lequel la séquence et/ou l'épaisseur des couches desdites particules sont analysées par une combinaison d'une microscopie électronique à balayage et d'une analyse aux rayons X ou par microscopie électronique à balayage avec détection d'électrons rétro-diffusés pour identifier le produit ou la composition de revêtement.

22. Procédé selon l'une quelconque des revendications 18 à 21, **caractérisé en ce que** lesdites particules sont ajoutées en une quantité de 0,0001 % à 10 % en poids par rapport au poids total du matériau et/ou de la composition de revêtement.

23. Composition de revêtement comprenant au moins un liant et des particules selon l'une ou plusieurs des revendications 1 à 17, dans laquelle la composition chimique, la séquence et/ou l'épaisseur des couches de la particule représente(nt) un code prédéfini.

24. Composition de revêtement, de préférence encre, selon la revendication 23, dans laquelle le revêtement comprend en outre des pigments choisis dans l'ensemble ayant des propriétés luminescentes, magnétiques, d'absorption des rayonnements UV, VIS et IR, de résonance radiofréquence et/ou hyperfréquences, thermochromiques, photochromiques ou optiquement variables.

25. Document de sécurité comprenant un marqueur appliqué par une composition de revêtement et/ou une encre selon la revendication 24.

26. Composition comprenant au moins un matériau organique et/ou inorganique et au moins un type de particules selon l'une ou plusieurs des revendications 1 à 17.
